# EUROPÄISCHE PATENTSCHRIFT

(11) **EP 4 139 080 B1**
(45) Veröffentlichungstag und Bekanntmachung des Hinweises auf die Patenterteilung: **12.06.2024**
(21) Anmeldenummer: 21729398.4
(22) Anmeldetag: 16.03.2021
(51) Int. Cl.: B23K 26/352, B23K 26/362, B23K 26/38, B23K 26/08, B23K 26/082, B23K 26/06, G05B 19/418, G06K 15/22, H04W 4/02

(54) **VERFAHREN ZUM BETREIBEN UND STEUERN EINER LASERVORRICHTUNG FÜR DAS GRAVIEREN, MARKIEREN, BESCHRIFTEN UND/ODER SCHNEIDEN EINES VORZUGSWEISEN FLACHEN WERKSTÜCKES**
METHOD FOR OPERATING AND CONTROLLING A LASER DEVICE FOR ENGRAVING, MARKING, INSCRIBING AND/OR CUTTING A PREFERABLY FLAT WORKPIECE
PROCÉDÉ POUR FAIRE FONCTIONNER ET COMMANDER UN DISPOSITIF À LASER CONÇU POUR SOUMETTRE UNE PIÈCE DE PRÉFÉRENCE PLANE À UN PROCESSUS DE GRAVURE, MARQUAGE, ÉCRITURE ET/OU COUPE

(30) Priorität: 24.04.2020 AT 503542020
(43) Veröffentlichungstag der Anmeldung: 01.03.2023
(73) Patentinhaber: Trotec Laser GmbH, 4614 Marchtrenk (AT)
(72) Erfinder: JAUKER, Alexander, 4501 Neuhofen an der Krems (AT)
(86) Internationale Anmeldenummer: PCT/AT2021/060088
(87) Internationale Veröffentlichungsnummer: WO 2021/212157

(56) Entgegenhaltungen:
- EP-A1- 2 169 491
- EP-A1- 3 560 725
- EP-B1- 2 169 491
- US-A1- 2012 241 428
- US-A1- 2012 296 461
- US-A1- 2017 308 111
- US-A1- 2019 224 778

## Beschreibung

Die Erfindung betrifft ein Verfahren zum Betreiben und Steuern einer Laservorrichtung für das Gravieren, Markieren, Beschriften und/oder Schneiden eines vorzugsweiser flachen Werkstückes, bei dem in einem Gehäuse der Laservorrichtung zumindest eine Strahlquellen in Form eines Lasers eingesetzt wird, wobei das Werkstück auf einem Bearbeitungstisch im Bearbeitungsraum des Gehäuses definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Steuer-Software, in der ein sogenannter Job abgearbeitet wird, erfolgt, sodass das Werkstück bevorzugt zeilenweise durch Verstellung eines Bewegungssystems, wie eine Schlitten bei einem Laserplotter oder eine Winkelverstellung bei einem Galvo-Markierlaser, bearbeitet wird, wie dies im Anspruch 1 beschrieben ist.

Die US 20120296461 A1 (Basis für den Oberbegriff von Anspruch 1) beschreibt ein Laserbearbeitungssystem mit mehrerer Laserbearbeitungsstationen. Hierbei weist jede Laserbearbeitungsstation einen Laser zum Bearbeiten eines Werkstückes auf, wobei für die Bearbeitung eines Werkstückes ein fertig übermittelter oder geladener Job eines bestimmten Lasertypes, nämlich eines Laserplotters, an eine bestimmte Laserbearbeitungsstation von einer Steuerung übermittelt und überwacht wird. Dabei wird eine Simulation zur Bestimmung der Produktionsrate für jede Laserbearbeitungsstation durchgeführt. Nachteilig ist hierbei, dass lediglich die Jobs mit den enthaltenen Bewegungsbahnen des Laserplotters zur Bestimmung der Produktionsrate abgearbeitet bzw. durchlaufen werden. Weiters ist in der EP 3560725 A1ein Verfahren zum Betreiben und Steuern einer Laservorrichtung, nämlich einen Laserplotter, zum Markieren, Beschriften und/oder Schneiden eines vorzugsweise flachen Werkstückes beschrieben, bei dem in einem Gehäuse der Laservorrichtung zumindest eine Strahlquellen in Form eines Lasers eingesetzt wird. Das Werkstück wird auf einem Bearbeitungstisch im Bearbeitungsraum des Gehäuses definiert abgelegt. Ein von der Strahlquelle abgegebener Laserstrahl wird über Umlenkelemente an zumindest eine Fokussiereinheit gesendet, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Steuer-Software, in der ein sogenannter Job abgearbeitet wird, erfolgt, sodass das Werkstück zeilenweise bearbeitet wird.

Bei Laservorrichtungen, insbesondere Laserplottern und Galvo-Markierlaser, wird das Laserlicht von einer Laserquelle über Umlenkelemente an ein Fokussiereinheit geleitet, wobei mit einer Fokussierlinse der Laserstrahl scharf gebündelt und in Richtung zu bearbeitendes Werkstück abgelenkt wird. Im Fokus des Laserstrahls entsteht dabei eine extrem hohe Leistungsdichte, mit der Werkstoffe geschmolzen oder verdampft, graviert, markiert oder beschriftet werden können. Dabei erfolgt die Bearbeitung, insbesondere die Gravur, zeilenweise, wozu unterschiedliche Laservorrichtungen bzw. -Systeme verwendet bzw. eingesetzt werden.

Einerseits wird ein Laserplotter eingesetzt, bei dem die Fokussiereinheit auf einen Schlitten montiert ist, der vorzugsweise über einen Riemenantrieb verstellt wird. Die Fokussiereinheit ist ebenfalls am Schlitten verstellbar angeordnet. Damit kann durch Verstellen des Schlittens und der Fokussiereinheit eine Bearbeitungsraum, insbesondere ein Bearbeitungstisch, auf dem das Werkstück aufgelegt wird, vollständig bearbeitet werden.

Andererseits sind Gravo-Markiergeräte bekannt, deren Fokussiereinheit ebenfalls eine Fokussierlinse zum Bündel des Laserstrahls aufweist, wobei die Fokussiereinheit vorzugsweise zentral über den Bearbeitungsraum positioniert ist. Um den gesamten Bearbeitungsraum mit dem gebündelten und fokussierten Laserstrahl bearbeiten zu können, weisen die Gravo-Markiergeräte in der Fokussiereinheit einen verstellbaren Spiegel auf, der den Laserstrahl an jede Position im definierten Bearbeitungsraum ablenken kann.

Der wesentliche Unterschiede dieser beiden Gerätetypen, also eines Laserplotters zu einem Gravo-Markierlaser, liegt somit in der Positions- bzw. Bewegungssteuerung für den Laserstrahl sowie der Fokussiereinheit.

Nachteilig ist dabei, dass für jeden Gerätetype ein eigener Job zur Bearbeitung des Werkstückes, in dem die Parameter, wie Beispiels Positions- bzw. Bewegungsdaten für die Erstellung einer Grafik bzw. Text, Fokussierpunkt, Leistung, Werkzeugdicke, Werkzeugmaterial, usw., erstellt werden muss. D.h., wenn eine Grafik oder Text sowohl am Laserplotter als auch mit dem Gravo-Markiergerät auf mehrere Werkstück graviert werden soll, so muss für die Bearbeitung zwei unterschiedliche Jobs, nämlich ein Laserplotter-Job und ein Gravo-Job, erstellt werden, die anschließend in die entsprechenden Gerätetype geladen werden.

Für die Joberstellung werden üblicherweise die Grafiken bzw. Texte auf einer entsprechend Software, wie beispielsweise Corel Draw, Paint, usw. erstellt, die anschließend in die jeweilige Software für den Laserplotter und/oder dem Gravo-Markierlaser importiert werden, worauf in den jeweiligen Softwaren die weiteren Einstellung der Parameter, wie beispielsweise Werkzeugmaterial, Werkzeugdicke, usw. eingestellt werden muss, sodass anschließend ein Job generiert werden kann, der in den jeweiligen Lasertype geladen wird.

Die Aufgabe der Erfindung liegt darin, ein Verfahren zu schaffen, bei dem einerseits die obgenannten Nachteile vermieden werden und andererseits die Bedienerfreundlichkeit wesentlich erhöht wird.

Die Aufgabe wird durch die Erfindung gelöst.

Die Aufgabe der Erfindung wird dadurch gelöst, dass in eine zentralen Bedienersoftware eine Graphik und/oder Text erstellt oder importiert wird, worauf in der zentralen Bedienersoftware zur Erstellung des Job die Parameter "Materialart, Materialdicke, Gravurtiefe und Effekt (Durchschneiden, Gravieren, Tiefgravieren, oder ähnliches)" eingestellt werden, worauf von der Bedienersoftware ein Lasertype, - Laserplotter oder Galvo-Markierlaser - vorgeschlagen bzw. ermittelt wird oder vom User der gewünschte Lasertype - Laserplotter oder Galvo-Markierlaser - ausgewählt wird, worauf nach Auswahl des Lasertyps von einem Analysetool die für die Erzeugung der Graphik und/oder Text erforderlichen Bewegungsparameter des ausgewählten Lasertypens berechnet und festlegt, wobei vom Analysetool bei Auswahl des Lasertyps "Laserplotter" die Bewegungsparameter für x-y Bewegungsbahnen eines Schlitten berechnet und erzeugt werden oder bei Auswahl des Lasertyps "Galvo-Markierlaser" die Bewegungsparameter für eine Winkelverstellung eines Spiegels berechnet und erzeugt werden, worauf von dem Analysetool die Laserleistung und Geschwindigkeit berechnet und festgelegt wird. Vorteilhaft ist hierbei, dass der User nur noch eine Software für die unterschiedlichen Lasertypen verwenden muss, sodass Fehler, insbesondere Einstellungsfehler, aufgrund unterschiedlicher Bedienerfunktionen bei unterschiedlichen Software verhindert werden. Ein weiterer wesentlicher Vorteil liegt in der Bedienerfreundlichkeit, da der User nur noch die minimalsten Einstellungen, wie Material, Werkstückdicke, Gravurtiefe und gegebenenfalls den gewünschten Lasertypen und/oder auch Linsentype, einstellen muss, worauf sämtliche erforderliche Informationen bzw. Daten erstellt werden.

Dabei ist es auch möglich, dass der User beide Lasertypen aktivieren kann, wodurch für jeden Lasertype ein eigener Job erstellt wird. Damit braucht der User nur noch einmal die grundlegenden Einstellungen vornehmen, worauf anschließend von der zentralen Bedienersoftware die weiteren fehlenden Daten bzw. Parameter ermittelt, berechnet werden, worauf ein entsprechender Job zur Weiterverarbeitung erstellt wird. Auch ist es möglich, dass aufgrund des gewählten Lasers oder Linse ein gewisser Effekt, der mit den vorhandenen Komponenten erzielt werden kann, vorgeschlagen wird, d.h., dass der Kunde beispielsweise einen speziellen Laser auswählt und aufgrund der Konfiguration bzw. Ausstattung der bestmögliche Effekt oder mehrerer Effekte mit der Bearbeitungszeit vorgeschlagen werden, sodass der Kunde anschließend den für ihn notwendigen Effekt auswählen kann.

Ein weiterer Vorteil liegt darin, dass dabei ein bereits bestehender oder älter Job von der zentralen Bedieneinheit geöffnet bzw. importiert werden kann, sodass der User den Lasertype ändern kann, worauf ein neuer Job für einen anderen Lasertype erstellt wird, der anschließend in die entsprechenden Laservorrichtung geladen wird. Dabei ist es möglich, dass bei älteren Jobs, die nicht mit der zentralen Bedieneinheit erstellt wurden, von der zentralen Bedieneinheit einige Abfragefenster, wie beispielsweise "Bei welchen Laser wurde der Job verwendet?" dem User angezeigt werden, die der User durch Eingabe oder Auswahl vorgegebener Antworten diese beantworten muss.

Von Vorteilen sind die Maßnahmen, bei denen von Analysetool bei Auswahl des Lasertyps "Laserplotter" die Bewegungsparameter für x-y Bewegungsbahnen eines Schlittens ermittelt und erzeugt werden. Dabei wird vom Analysetool, falls erforderlich, auch die Tischhöhe ermittelt, die, wenn notwendig, auch während des Prozesses geändert werden kann.

Es sind aber auch die Maßnahmen von Vorteil, bei denen von Analysetool bei Auswahl des Lasertyps "Galvo-Markierlaser" die Bewegungsparameter für eine Winkelverstellung eines Spiegels ermittelt und erzeugt werden. Dabei wird gleichzeitig die Fokussierung des Laserstrahls ermittelt und festgelegt, da aufgrund der Längenänderungen des Laserstrahls sich auch der Fokuspunkt verändert.

Es sind die Maßnahmen von Vorteil, bei denen im Analysetool zur Festlegung der Bewegungsparameter die unterschiedlichen Strahldurchmesser der Lasertypen berücksichtigt wird. Damit wird verhindert, dass bei dickerem Durchmesser des Laserstrahls und zu naheliegenden Bewegungsbahnen eine bestimmter Abschnitt des Werkstückes doppelt bearbeitet wird, wodurch die Graviertiefe am Werkstück in diesem Bereich wesentlich verändert werden würde. Dies ist insofern notwendig, da aufgrund unterschiedlicher Linsen in den beiden Gerätetypen, also im Laserplotter und im Galvo-Markierlaser, unterschiedlich breite Laserpunkte gebildet werden, sodass es bei zu engen Bahnen zu überschneiden kommen kann, wenn dies nicht im Analysetool korrigiert werden würde.

Vorteilhaft sind aber auch die Maßnahmen, bei denen je nach Lasertype zur Berechnung der Bewegungsparameter ein hinterlegte Strahldurchmesser, insbesondere Laserpunkt-Durchmesser, herangezogen wird oder die Linsen des ausgewählten Lasertyps abgefragt und der Strahldurchmesser berechnet oder aus einer Datenbank gemäß der eingesetzten Linse ermittelt wird. Dadurch wird erreicht, dass die Qualität der Bearbeitung angepasst werden kann. Auch wird dadurch verhindert, dass Bereiche am Werkstück durch überlappende Fokussierpunkte mehrfach bestrahlt bzw. bearbeitet werden.

Von Vorteil sind die Maßnahmen, bei denen beim Parameter "Effekte" ein oder mehrere Einstelloptionen, wie Durchschneiden, Gravierqualität, insbesondere Gravieren geringe Qualität (300dpi) oder Gravieren von feinen Details (600dpi) oder Gravieren mit hohem Kontrast oder Gravieren von Fotos, Tiefes Gravieren, schnelles Schneiden, Genaues Schneiden, usw., ausgewählt werden. Dadurch wird erreicht, dass der User einfach unterschiedliche Qualitätseinstellung vornehmen kann. Dabei wird ihm vorzugsweise die benötigte Bearbeitungszeit angezeigt, sodass der User bei Erhöhung der Qualität einfach erkennen kann, wie lange die Bearbeitung dauert. Somit ist es möglich, dass bei dringend benötigten Werkstücken der User die Qualität verringert und somit die Bearbeitungszeit reduziert wird.

Es sind aber auch die Maßnahmen von Vorteil, bei denen beim Aktivieren des Parameters "Lasertype" ein Fenster geöffnet wird, in dem alle verfügbaren Lasergeräte ersichtlich sind. Dadurch wird erreicht, dass damit erkennen kann, welche Lasertypen für die Bearbeitung zur Verfügung stehen und kann somit seinen bevorzugten Laser auswählen. Weiters hat der User damit die Möglichkeit, dass der Standort eines bestimmten Lasertyps durch einfaches Antippen bzw. Aktivieren abgefragt werden kann. Dies kann dabei firmenintern, beispielsweise die Angabe der Abteilung, der Werkshalle, usw. oder firmenextern durch geografische Darstellung, insbesondere Google-Maps, erfolgen, wobei hierzu ein entsprechendes Fenster geöffnet wird. Somit kann der User firmenintern den für Ihn am einfachsten erreichbaren Laser auswählen oder bei externen Lasern beispielsweise den am nächstliegenden Laser.

Von Vorteil sind die Maßnahmen, bei denen im geöffneten Fenster sämtlich zur Verfügung stehenden Lasergeräte ausgewählt werden können. Dadurch kann ein ganz bestimmter Laser gewählt werden. Der User kann somit manuell die Jobs einfach auf die zur Verfügung stehenden Laser verteilen. Dabei ist es auch möglich, dass immer nur jene Geräte angezeigt werden, die bei der Einstellung ausgewählt wurden, d.h., dass bei Auswahl von Laserplotter nur Laserplotter angezeigt und ausgewählt werden können, wogegen die vorhandenen Gravo-Markierlaser inaktiv dargestellt werden oder vollständig weggelassen werden. Selbstverständlich ist es auch möglich, dass bei ausgewählten Lasertype "Laserplotter" der User jedoch einen "Gravo-Markierlaser" auswählt, da dieser beispielsweise gerade frei wäre, sodass eine entsprechende Abfrage erscheint, ob der Lasertype geändert werden soll, worauf bei Bestätigung dieser Abfrage das Analysetool eine Neuberechnung vornimmt.

Es sind auch die Maßnahmen von Vorteil, bei denen zu den einzelnen Lasergeräten zusätzlich Informationen, wie Status, Bearbeitungszeit, Auslastung, usw. angezeigt werden. Dadurch kann der User sofort erkennen, welcher Laser frei ist oder als nächster frei wird.

Vorteilhaft sind auch die Maßnahmen, bei denen alle zur Verfügung stehenden Lasertypen angezeigt und ausgewählt werden können. Damit wird erreicht, dass besondere Eigenschaften der unterschiedlichsten Laser vom Analysetool für die Erstellung des Jobs berücksichtigt werden kann.

Von Vorteil sind auch die Maßnahmen, bei denen die zentrale Bedienersoftware über einem übergeordneten Netzwerk, insbesondere in einer Cloud, aufgerufen wird, wobei die zur Verfügung stehenden Lasertypen, insbesondere Lasergeräte, ebenfalls mit der Cloud verbunden werden bzw. sind. Dadurch wird erreicht, dass einerseits die zentrale Bedienersoftware einfach gewartet und immer auf den neuesten Stand gehalten werden kann und andererseits mehrere User gleichzeitig mit der Bedienersoftware arbeiten können. Dies ist insofern von Vorteil, wenn ein Unternehmen mehrere Standorte betreibt, sodass die Auslastung der einzelnen Laser für alle ersichtlich ist.

Es sind auch die Maßnahmen von Vorteil, bei denen der von der zentralen Bedienersoftware erstellte Job für die verschiedensten Lasertypen in der Cloud gespeichert wird. Dadurch wird erreicht, dass von unterschiedlichen Standorten einfach der Job zur Bearbeitung gedownloadet werden kann. Dabei können die verschiedensten Job beispielsweise auf einer zentralen Standort erstellt werden, worauf nach Fertigstellung diese von den Produktionsstandorten verarbeitet werden.

Auch sind die Maßnahmen von Vorteil, bei denen der Job von einem oder mehreren Laserplottern gleicher und unterschiedlicher Standorte gleichzeitig geladen und verarbeitet werden kann. Dadurch kann bei größeren Stückzahlen diese durch mehrmaliges Downloaden der Job auf unterschiedlichen Lasergeräten schnellst möglich produziert werden.

Von Vorteil sind die Maßnahmen, bei denen bei Änderung des Jobs an einem Laserplotter diese Änderungen den weiteren diesen Job verarbeitenden Laserplottern zur Verfügung gestellt werden, insbesondere angezeigt werden. Damit kann jeder User sehen, welche Änderungen, wo vorgenommen wurden und kann diese auch für sich selbst übernehmen oder nicht akzeptieren.

Es sind auch die Maßnahmen von Vorteil, bei denen beim Verbinden eines Laserplotters mit der webbasierten zentralen Bedienersoftware, sämtlich diesem Laserplotter betreffenden Einstellungen/Parameter und der Standort automatisch hochgeladen und in einer webbasierten Datenbank gespeichert werden. Dadurch ist es möglich, dass bei Auswahl dieses Lasergerätes von der Bedienersoftware, insbesondere dem Analysetool, die entsprechenden Daten des Gerätes berücksichtigen kann. Insbesondere erfolgt dies derart, dass bei Auswahl des speziellen Lasers die hochgeladenen Eigenschaften für die Berechnung geladen und berücksichtigt werden. Dabei ist es auch möglich, dass die Eigenschaften direkt vom online verbundenen Laser für die Job-Erstellung geladen werden.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: eine schaubildliche Darstellung des Verfahrens für die Erzeugung eines Jobs über eine zentralen Bedienersoftware für unterschiedliche Lasertypen bzw. Lasergeräte, in vereinfachter, schematischer Darstellung;
- Fig. 2: eine schaubildliche Darstellung eines Ablaufes für die Erstellung eines Job von einer zentralen Bedienersoftware für unterschiedliche Lasertypen, in vereinfachter, schematischer Darstellung;
- Fig. 4: eine Bildschirmdarstellung der Bedieneroberfläche, in vereinfachter, schematischer Darstellung ;
- Fig. 5: eine weiter Bildschirmdarstellung der Bedieneroberfläche, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

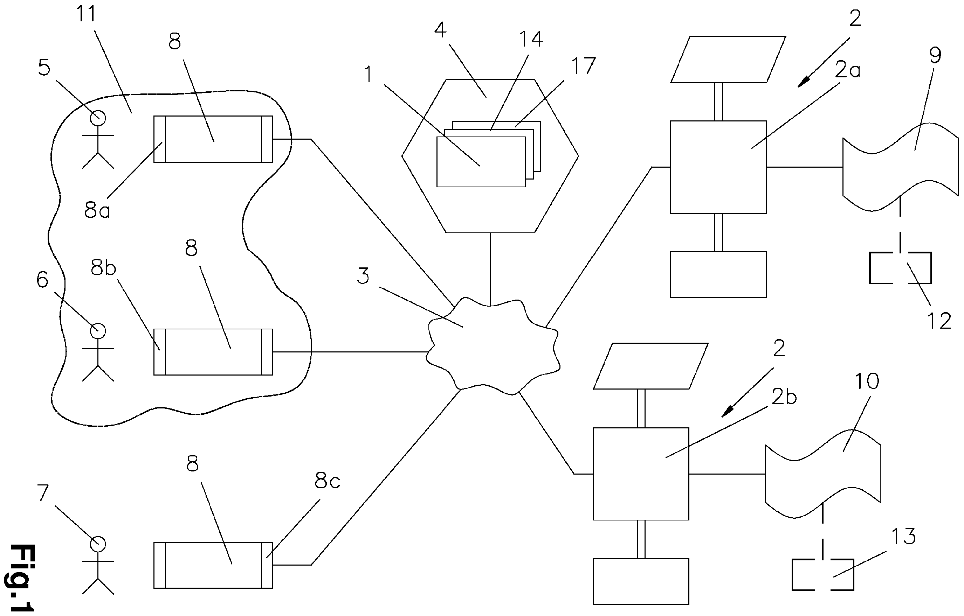

In den Fig. 1 bis 4 ist ein Verfahrensablauf für eine zentrale Bedienersoftware 1 gezeigt, die für unterschiedliche Laservorrichtungen bzw. Lasergeräte 2 eingesetzt wird. Dabei wird die Bedienersoftware 1 einerseits für sogenannte Laserplotter 2a und andererseits für sogenannte Galvo-Markierlaser 2b verwendet.

d.h., dass ein User mit ein und derselben Bedienersoftware 1 einen Jobs für die Bearbeitung eines Werkstückes erstellt und verwendet.

Vorzugsweise ist die Bedienersoftware 1 webbasierend aufgebaut, sodass diese über das Internet 3 in einer Cloud 4 installiert ist. Ein User 5,6,7 kann dabei über einen Webbrowser 8 durch Eingabe der Adresse über das Internet 3 zugreifen, sodass die Bedieneroberfläche der Bedienersoftware 1 im Browser 8 angezeigt wird und entsprechende Eingabe zum Erstellen eines Jobs 9,10 für die unterschiedlichsten Lasergeräte 2, insbesondere Laserplotter 2a und/oder Galvo-Markierlaser 2b, vorgenommen werden können. Bevorzugt hat dabei jeder User 5-7 seinen eigenen Login, sodass eine entsprechende Zuordnung einfach vorgenommen werden kann. Vorteilhaft ist dabei, dass mehrere Hersteller bzw. Firmen 11 ein Firmenlogin bzw. Firmennetzwerk 11 erstellen kann, sodass mehrere User 5,6 einer Firma einzeln oder gleichzeitig auf die zentrale Bedienersoftware 1 zugreifen können und dabei sämtliche zu dieser Firma zugeordnete Laservorrichtungen 2 bzw. Lasergeräte 2 sehen können. Firmenbezogene Lasergeräte 2 sind dabei nicht öffentlich sichtbar, sodass nur User 5,6 dieses Firmennetzwerkes, die eine entsprechende Berechtigung haben, diese Lasergeräte 2 über die zentrale Bedienersoftware 1 sehen und ansprechen können. Selbstverständlich ist es möglich, dass ein berechtigter User 5,6, insbesondere ein Administrator 5, des Firmennetzwerkes 11 eine oder mehrere Lasergeräte 2 öffentlich zugänglich macht, sodass auch von externen User 7 entsprechende Jobs 9, 10 an diese Lasergeräte 2 für eine Auftragsarbeit senden.

Wie nun aus Fig. 1 ersichtlich, verbindet sich ein User 5-7 über den Browser 8, der beispielsweise auf einen Laptop 8a, Computer, Tablett 8b oder Handy 8c geöffnet werden kann, mit dem Internet 3 und in weiterer Folge mit der zentralen Bedienersoftware 1 in der Cloud 4 verbindet. Hier gibt ein User 5-7 eine entsprechende Internetadresse, insbesondere eine sogenannte IP-Adresse, ein, sodass eine Verbindung aufgebaut wird. Anschließend wird im Browser 8 die Bedieneroberfläche der zentralen Bedienersoftware 1 angezeigt. Der User 5-7 kann nunmehr ganz normal die Bedienersoftware 1 nützen, so als wäre diese auf seiner Komponente, also beispielsweise dem Laptop 8a, dem Computer, dem Tablett 8b, oder dem Handy 8c, installiert.

Damit die User 5-7 auch die verfügbaren Lasergeräte 2 über die zentrale Bedienersoftware 1 auswählen können, sind die Lasergeräte 2 mit entsprechenden Komponenten, insbesondere eine Netzwerkkarte, ausgestattet, sodass durch Verbinden eines Lasergerätes 2 mit dem Internet 3 dieses Lasergerät 2 in der Cloud 4, insbesondere der zentralen Bedienersoftware 1, angemeldet und konfiguriert werden kann. Dabei können die Lasergeräte 2 derart konfiguriert werden, dass diese öffentlich sichtbar sind oder nur in dem eigenen Firmennetzwerk 11 sichtbar sind.

Erfindungsgemäß ist nunmehr vorgesehen, dass mit der zentralen Bedienersoftware 1 sämtliche Lasergeräte 2 unterschiedlicher Bauarten, also alle Laserplotter 2a und Galvo-Markierlaser 2b, mit der Bedienersoftware 1 verbunden und auch auswählbar sind. Dabei erstellt die Bedienersoftware 1 sowohl einen Job 9 für einen Laserplotter 2a als auch einen Job 10 für einen Galvo-Markierlaser 2b, wogegen aus dem Stand der Technik hierzu zwei unterschiedliche Softwaren notwendig sind. Damit wird erreicht, dass der User 5-7 nur noch eine Oberfläche bedienen muss, um einen Job 9,10 für einen oder beiden Lasertypen zu erzeugen.

Der vollständigkeitshalber wird erwähnt, dass bei den Lasergeräte in einem Gehäuse zumindest eine Strahlquellen in Form eines Lasers eingesetzt wird, wobei ein Werkstück 12, 13 auf einem Bearbeitungstisch im Bearbeitungsraum des Gehäuses definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird. Die Steuerung, insbesondere die Positionssteuerung des Werkstückes zum Laserstrahl wird dabei über eine in einer Steuereinheit laufende Steuer-Software, in der der Job 9 oder 10 abgearbeitet wird, erfolgt, sodass das Werkstück bevorzugt zeilenweise durch Verstellung eines Bewegungssystems, wie eine Schlitten bei einem Laserplotter 2a oder eine Winkelverstellung bei einem Galvo-Markierlaser 2b, bearbeitet wird. Die beiden Lasergeräte 2 unterscheiden sich besonders in der Bewegungssteuerung und der verwendeten Fokussierlinse, insbesondere im Strahlendurchmesser.

Diese wesentliche Unterschiede werden dabei bei der Erstellung des Jobs 9,10 von einem Analysetool 14 berücksichtigt.

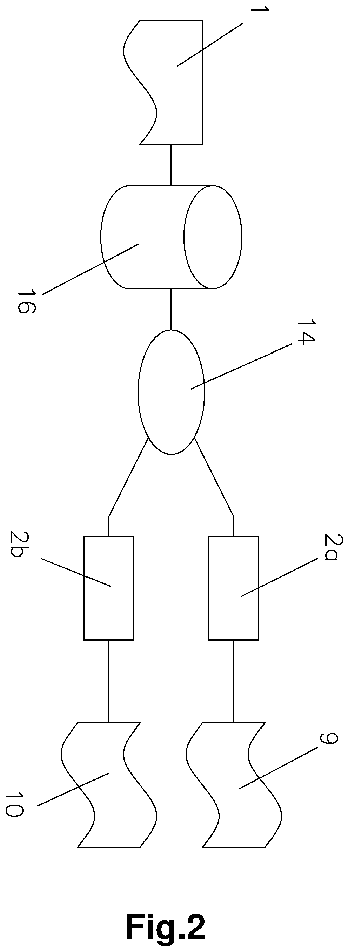

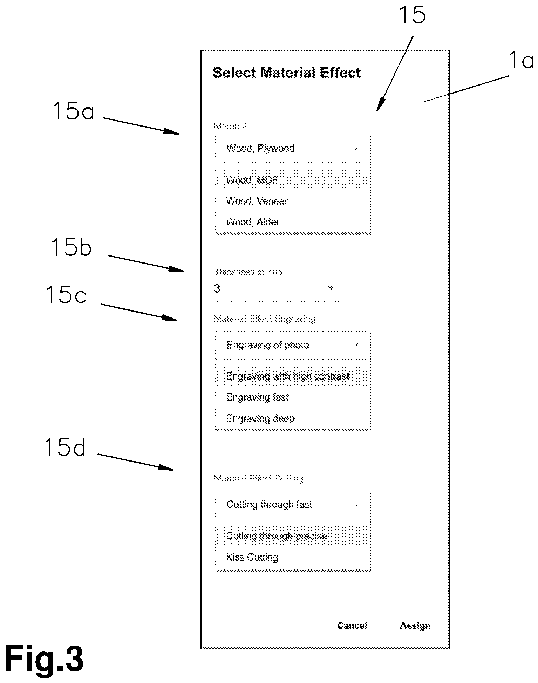

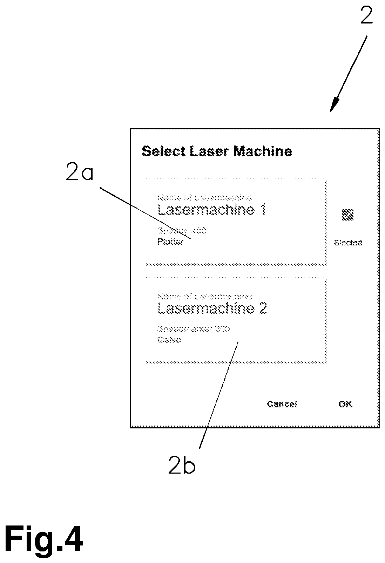

Damit nunmehr ein Job 9 und/oder 10 erstellt werden kann, muss ein User 5-7 lediglich seine Grafik bzw. Bild oder dem Text erstellen oder importieren und einige wenige Parameter 15 einstellen. Um die Bedienerfreundlichkeit zu erhöhen, braucht der User 5-7 lediglich vier Parameter 15 nämlich
- 15a: Material des Werkstückes
- 15b: Dicke des Werkstückes
- 15c: Effekt für die Gravur bzw. Gravurtiefe
- 15d: Schneideffekt
einstellen, wie dies schematisch in Fig. 3 durch Darstellung einer Bildschirmoberfläche der Bedienersoftware. Somit ist es möglich, dass auch ungeschulte oder sogenannte Leien die Einstellung der Parameter 15 vornehmen kann. Hierzu wird vom User 5-7 in der zentralen Bedienersoftware 1 eine Graphik und/oder Text erstellt oder importiert, worauf in der zentralen Bedienersoftware 1 zur Erstellung des Job 9 oder 10 die Parameter "Material 15a, Materialdicke 15b, Gravurtiefe bzw. Effekt 15c und Schneideffekt 15d", eingestellt werden. Anschließend wird Bedienersoftware 1 ein Lasertype, - Laserplotter 2a oder Galvo-Markierlaser 2b - vorgeschlagen bzw. ermittelt oder vom User wird der gewünschte Lasertype - Laserplotter oder Galvo-Markierlaser - ausgewählt, wie dies in Fig. 4 eines Auszuges aus der Bedieneroberfläche 1a ersichtlich ist, worauf nach Auswahl des Lasertyps 2 von dem Analysetool 14 die für die Erzeugung der Graphik und/oder Text erforderlichen Bewegungsparameter des ausgewählten Lasertypens 2 ermittelt bzw. berechnet und festlegt wird, worauf von dem Analysetool 14 die Laserleistung und Geschwindigkeit berechnet und festgelegt wird und der Job 9 oder 10 erstellt wird. Ein derartiger Verfahrensablauf ist in Fig. 2 schematisch dargestellt. Selbstverständlich ist es möglich, dass der User 5-7 die Möglichkeit hat jeden Parameter 15 zu ändern.

Dabei ist es möglich, dass von der Bedienersoftware 1 und/oder vom Analysetool 14 auf eine Datenbank 16, insbesondere Material-Datenbank, zugegriffen wird, in der weitere Parameter 15 für die Bearbeitung der unterschiedlichsten Materialien hinterlegt sind. Weiters können in dieser Datenbank 16 weitere Sicherheitsrelevante Parameter 15 gespeichert sein, die vom Analysetool 14 ebenfalls berücksichtigt werden. Hierzu sind auch maschinenbezogene Daten, wie beispielsweise verwendete Linsen, Filtertype, usw. hinterlegt, die für die Erstellung und Wahl des Lasergerätes 2 wesentlich sind. Selbstverständlich ist es auch möglich, dass derartige maschinenbezogene Daten direkt vom Analysetool 14 über die Internetverbindung von den jeweiligen Lasergeräten 2 online abgefragt werden. Insbesondere wird dies dann verwendet, wenn der User 5-7 ein bestimmtes Lasergerät 2 auswählt, auf dass das Analysetool 14 bei der Erstellung und Berechnung des Jobs 9,10 zugreift und die entsprechenden Daten abfragt. Das Analysetool 14 berücksichtigt unteranderem auch die in den Lasergeräten 2 eingesetzten Linsen und die sich daraus ergebenden Strahldurchmesser, d.h., dass bei Auswahl eines Lasergerätes 2 und zu hoher Auflösung bzw. Qualität, die durch einen zu dicken Strahldurchmesser nicht erreicht werden kann, eine Meldung erscheint, mit dem Hinweis, dass die gewählte Qualität nicht erreicht werden kann oder ein anderes Lasergerät gewählt werden sollte, um die Qualität zu erreichen.

Man kann also sagen, dass der Kunde bzw. User 5-7 alle für die Erstellung eines Werkstückes 13,14 relevanten Arbeitsschritte in der zentralen webbasierten Bedienersoftware 1, mit der er sich über einen Browser 8 verbinden kann, abwickeln kann, wobei keine zusätzlichen Softwarepakete benötigt werden. Durch die Abbildung eines gesamtheitlichen Systems werden Arbeitsschritte auf einander optimiert und Schnittstellen In-Effizienzen gänzlich beseitig. Die Laser-Beschickung mit Prozess und Arbeitsparameters ist von einer einzigen zentralen Anlaufstelle nämlich der Cloud 4 möglich. Hier können Auftragsdaten verwaltete werden und direkt einem jeweiligen Laser bzw. Lasergerät 2 zugewiesen und auch gestartet. Hierzu kann ein Job-Datenbank 17 direkt befüllt werden, in der die erstellten Jobs 9, 10 für alle Lasergeräte 2, also für Laserplotter 2a und Galvo-Markierlaser 2b, gespeichert werden. Dabei ist es auch möglich, dass über verschiedene Attribute Auftragsdaten mitübertragen werden können.

Durch die Integration der Job-Datenbank 17 in der Cloud 4 bzw. durch die Speichermöglichkeit der Jobs 9,10 in der Cloud 4 kann der Job 9,10 für die Werkstückbearbeitung von der webbasierten Datenbank 17 bzw. Cloud 4 direkt von der Laservorrichtung bzw. dem Lasergerät 2 heruntergeladen werden, wobei vor dem Start des Download oder während des Downloads der Standort der Laservorrichtung 2 bzw. des Lasergerätes 2 ermittelt bzw. abgefragt wird, worauf die geltenden Richtlinien der Sicherheitseinstellungen und gegebenenfalls weitere Einstellungen bzw. Parameter zum ermittelten Standort, insbesondere des Landes bzw. der Region, ermittelt werden und die dazugehörigen Parameter, insbesondere sogenannte Sicherheitsparameter, im Job 9,10 überprüft und gegebenenfalls angepasst werden, d.h., dass die Jobs 9, 10 in der Job-Datenbank 17 den einzelnen Lasergeräten 2 zugeteilt wird, die aufeinanderfolgend abgearbeitet werden, wobei diese je nach Verarbeitungsstandort entsprechend an die dort vorgeschrieben Richtlinien angepasst werden. Somit ist es möglich, dass ein automatischer oder manueller Download des Jobs 9,10 durchgeführt werden kann und der User 5-7 keinerlei Anpassungen mehr vornehmen muss.

Vorzugsweise werden die Jobs 9,10 manuell heruntergeladen, da von Bediener des Lasergerätes 2 meist das Werkstück 12,13 in den Bearbeitungsraum des Lasergerätes 2 eingelegt werden muss. Hat der Laser 2 allerdings eine automatische Zufuhrvorrichtung und eine automatische Abfuhrvorrichtung so kann vom Laser die für ihn zugeteilten Jobs 9,10 selbstständig laden und verarbeiten.

Somit ist es möglich, dass der Kunde bzw. User 5-7 die Möglichkeit hat, seine Files, also die Jobs 9.10, überall auf der Welt für den Laser 2 aufzubereiten und danach zum Gerät gehen und diese dann dort abrufen und unmittelbar abarbeiten kann. Durch die automatische Anpassung des Jobs 9,10 an die Vorschriften des Standortes werden alle Richtlinien zur Maschinen-Sicherheit eingehalten.

Damit ist es erstmals möglich, dass unabhängig vom Lasergeräten 2 und Standort in der webbasierten Software 1 bzw. Bedienersoftware 1 Jobs 9,10 erzeugt werden und ohne zusätzliche Anpassungen durch den User 5-7 zwischen allen möglichen Lasermaschinen 2 bzw. Lasergeräten 2 und Standorten ausgetauscht werden können, wobei bei Ändern eines Lasertyps beispielsweise von einem Galvo-Markierlaser 2b auf einen Laserplotter 2a eine Neuberechnung durch das Analysetool 14 zum Anpassen der Bewegungsparameter vorgenommen wird. Ermöglicht wird das durch ein offenes Format der Programmierung namens "MIP". Dies ist eine textbasierte Kommandosprache für Laser 2 in der Metadaten (Anzahl der Instruktionen, Ansteuerung von Peripherie wie zb.: Absaugungen etc.) + Maschinenkommandos enthalten sind. Dabei basiert der Austausch von Jobs 9,10 zwischen unterschiedlichen Maschinentypen, also einem Laserplotter 2a und einem Gravo-Markierlaser 2b, für das Analysetool 14 auf folgenden Aspekten:
- eine zentrale Materialdatenbank 16 ( z.B. der Cloud 4)
- Absolute Parameter und keine Prozentangaben, wie aus dem Stand der Technik üblich
- Eine zentrale Austauschmöglichkeit der Jobs 9, 10 über die Cloud 4
- Eine Intelligenz die Materialparameter zwischen den Geräten 2 transformiert
- Normierung der Geräte 2 zueinander,
- Sowie der Standort für die Richtlinien

Weiters ist es möglich, dass der Kunden bzw. User 5-7 seine eigenen Files, insbesondere selbsterstellte Grafik oder Text oder alte Jobs, in die zentrale webbasierte Bedienersoftware 1 importieren kann. Dabei werden beim Importieren in die Lasersoftware bzw. Bedienersoftware 1 automatisch und ohne weiteres Zutun des User 5-7 für den Laserprozess optimal aufbereitet und mögliche schadhafte Stellen im Hinblick auf den Laserprozess repariert. Der User 5-7muss die Files nicht mehr manuell und zeitintensiv vorbereiten.

Dabei werden importierte Files auf möglich schadhafte Punkte von der Bedienersoftware, insbesondere dem Analysetool, geprüft:
∘ Nicht vollständig geschlossene Kontouren an welchen der Laser ungewollt stoppen würde.
∘ Nicht verbundene Elemente
∘ Überschneidungen von Geometrien
∘ Richtungsänderungen von angrenzenden Elementen
∘ Duplizierungen von identen Elementen werden zu einer einzigen Entität reduziert
∘ Subgrafiken werden zu einer einzigen Grafik reduziert

Dadurch wird erreicht, dass die Maschinenbewegung und Durchlaufzeit wesentlich verkürzt wird.

Man kann also sagen, dass dem Kunden bzw. User 5-7 eine neue Benutzung zur Verfügung gestellt wird, welche auch untrainierten Usern 5-7 die sofortige Benutzung ermöglicht. Laser Einstellungen wie zB. Laserleistung oder Geschwindigkeit werden soweit abstrahiert dass für die Benutzung der Lasermaschine 2 kein explizites technisches Grundverständnis erforderlich ist. Benutzer bzw. User 5-7 müssen nur noch das zu bearbeitende Material, die Materialdicke, Effekt (gewünschte Qualität) und den Schneideffekt auswählen, um sämtliche andere Parameter 15 durch das Analysetool 14 zu ermitteln. Zur Vereinfachung für den User 5-7 können die die Effekte 15c folgende Auswahlpunkte umfassen: "Gravieren von feinen Details", "Gravieren mit hohem Kontrast", "Gravieren von Fotos", "Tiefes Gravieren", "Schnelles Schneiden", "Genaues Schneiden", ...". Auch ist es möglich, dass Farben oder Ebenen, wie aus dem Stand der Technik bekannt, einem gewünschten Materialeffekt zugeordnet werden können.

Die Cloud 4 wird aber auch zum Betreiben und Steuern einer Laservorrichtung 2 für das Gravieren, Markieren, Beschriften und/oder Schneiden eines vorzugsweiser flachen Werkstückes verwendet. Dabei wird der Job 9,10 für die Werkstückbearbeitung von einer webbasierten Datenbank 17 bzw. Cloud 4 direkt von der Laservorrichtung 2 bzw. Lasergerät 1, insbesondere Laserplotter 2a und/oder Galvo-Markierlaser 2b, heruntergeladen, wobei vor dem Start des Download oder während des Downloads der Standort der Lasers ermittelt bzw. abgefragt wird, worauf die geltenden Richtlinien der Sicherheitseinstellungen und gegebenenfalls weitere Einstellungen bzw. Parameter zum ermittelten Standort, insbesondere des Landes bzw. der Region, ermittelt werden und die dazugehörigen Parameter, insbesondere sogenannte Sicherheitsparameter, im Job überprüft und gegebenenfalls angepasst werden, d.h., dass je nach Land bzw. Region der heruntergeladen Job 9,10 an die dort geltende Richtlinien für die Bearbeitung des Werkstückes 12,13 durch einen Laser automatisch angepasst wird, sodass der Benutzer keine Anpassungen mehr durchführen muss. Als vorteilhaft hat sich herausgestellt, dass die ermittelten Richtlinien für die verschiedenen Standorte, insbesondere Länder bzw. Regionen, in einer webbasierten Datenbank 17 bzw. in der Cloud 4, gespeichert werden. Der Ordnung halber sei abschließend darauf hingewiesen, dass zum besseren Verständnis des Aufbaus des Gravurablaufes 1 und deren Komponenten bzw. dessen Bestandteile teilweise unmaßstäblich und/oder vergrößert und/oder verkleinert und vor allem nur schematisch dargestellt wurden.

## Patentansprüche

1. Verfahren zum Erstellen eines Jobs (9,10) von einer zentralen Bedienersoftware (1) für unterschiedliche Lasertypen (2), insbesondere Laserplotter (2a) oder Galvo-Markierlaser (2b), zum Gravieren, Markieren, Beschriften und/oder Schneiden eines vorzugsweisen flachen Werkstückes (12,13), bei dem in einem Gehäuse der Laservorrichtung (2) zumindest eine Strahlquelle in Form eines Lasers zum Bearbeiten des Werkstück (12,13) eingesetzt wird, wobei das Werkstück (12,13) in einem Bearbeitungsraum auf einem Bearbeitungstisch definiert abgelegt wird und ein von der Strahlquelle abgegebener Laserstrahl über Umlenkelemente an zumindest eine Fokussiereinheit gesendet wird, von der der Laserstrahl in Richtung Werkstück (12,13) abgelenkt und entsprechend positioniert wird, wobei die Steuerung über eine in einer Steuereinheit laufende Steuer-Software, in der ein sogenannter Job abgearbeitet wird, erfolgt, wobei in einer zentralen Bedienersoftware (1) eine Graphik und/oder Text erstellt oder importiert wird, worauf in der zentralen Bedienersoftware (1) zur Erstellung des Jobs (9,10) die Parameter (15) " Material (15a), Materialdicke (15b), Gravurtiefe bzw. Effekt (15c) und Schneideffekt (15d)" eingestellt werden, worauf von der Bedienersoftware (1) ein Lasertyp (2), - Laserplotter (2a) oder Galvo-Markierlaser (2b) - vorgeschlagen bzw. ermittelt wird, oder vom User der gewünschte Lasertyp (2) - Laserplotter (2a) oder Galvo-Markierlaser (2b) - ausgewählt wird, **dadurch gekennzeichnet, dass** nach Auswahl des Lasertyps (2) von einem Analysetool (14) die für die Erzeugung der Graphik und/oder Text erforderlichen Bewegungsparameter des ausgewählten Lasertypens (2) berechnet und festlegt werden, wobei vom Analysetool (14) bei Auswahl des Lasertyps (2) "Laserplotter (2a)" die Bewegungsparameter für x-y Bewegungsbahnen eines Schlitten berechnet und erzeugt werden oder bei Auswahl des Lasertyps (2) "Galvo-Markierlaser (2b)" die Bewegungsparameter für eine Winkelverstellung eines Spiegels berechnet und erzeugt werden, worauf von dem Analysetool (14) die Laserleistung und Geschwindigkeit berechnet und festgelegt werden.

2. Verfahren nach Anspruch 1, **dadurch gekennzeichnet, dass** im Analysetool (14) zur Festlegung der Bewegungsparameter die unterschiedlichen Strahldurchmesser der Lasertypen (2) berücksichtigt werden

3. Verfahren nach einem der vorhergehenden Ansprüche, **dadurch gekennzeichnet, dass** je nach Lasertyp (2) zur Berechnung der Bewegungsparameter ein hinterlegte Strahldurchmesser, insbesondere Laserpunkt-Durchmesser, herangezogen wird oder die Linsen des ausgewählten Lasertyps (2) abgefragt und der Strahldurchmesser berechnet oder aus einer Datenbank gemäß der eingesetzten Linse ermittelt wird.

4. Verfahren nach einem der vorhergehenden Ansprüche, **dadurch gekennzeichnet, dass** beim Parameter (15) "Effekte (15c)" ein oder mehrere Einstelloptionen, wie Durchschneiden, Gravierqualität, insbesondere Gravieren geringer Qualität oder Gravieren von feinen Details oder Gravieren mit hohem Kontrast oder Gravieren von Fotos, Tiefes Gravieren, schnelles Schneiden, Genaues Schneiden, usw., ausgewählt werden.

5. Verfahren nach einem der vorhergehenden Ansprüche, **dadurch gekennzeichnet, dass** beim Aktivieren des Parameters (15) "Lasertyp (2)" ein Fenster geöffnet wird, in dem alle verfügbaren Lasergeräte (2) ersichtlich sind.

6. Verfahren nach Anspruch 5, **dadurch gekennzeichnet, dass** im geöffneten Fenster sämtlich zur Verfügung stehenden Lasergeräte (2) ausgewählt werden können.

7. Verfahren nach Anspruch 5 oder 6, **dadurch gekennzeichnet, dass** zusätzlich Informationen der angezeigten Lasergeräte (2), wie Status, Bearbeitungszeit, Auslastung, usw. angezeigt werden.

8. Verfahren nach einem der vorhergehenden Ansprüche, **dadurch gekennzeichnet, dass** alle zur Verfügung stehenden Lasertypen (2) angezeigt und ausgewählt werden können.

9. Verfahren nach einem der vorhergehenden Ansprüche, **dadurch gekennzeichnet, dass** die zentrale Bedienersoftware (1) über einem übergeordneten Netzwerk, insbesondere in einer Cloud (4), aufgerufen wird, wobei die zur Verfügung stehenden Lasertypen (2), insbesondere Lasergeräte (2), ebenfalls mit der Cloud (4) verbunden werden bzw. sind.

10. Verfahren nach einem der vorhergehenden Ansprüche, **dadurch gekennzeichnet, dass** der von der zentralen Bedienersoftware (1) erstellte Job für die verschiedensten Lasertypen (2) in der Cloud (4) gespeichert wird.

11. Verfahren nach einem der vorhergehenden Ansprüche, **dadurch gekennzeichnet, dass** der Job (9,10) von einem oder mehreren Lasergeräte (2), insbesondere Laserplottern (2a) und/oder Galvo-Markierlaser (2b), gleicher und unterschiedlicher Standorte gleichzeitig geladen und verarbeitet werden kann.

12. Verfahren nach Anspruch 1 oder 2, **dadurch gekennzeichnet, dass** bei Änderung des Jobs (9,10) an einem Lasergerät (2), insbesondere Laserplotter (2a) und/oder Galvo-Markierlaser (2b), diese Änderungen den weiteren diesen Job (9,10) verarbeitenden Lasergerät (2) zur Verfügung gestellt werden, insbesondere angezeigt werden.

13. Verfahren nach einem der vorhergehenden Ansprüche, **dadurch gekennzeichnet, dass** beim Verbinden eines Lasergerätes (2) mit der webbasierten zentralen Bedienersoftware (1), sämtlich diesem Lasergerät (2) betreffenden Einstellungen/Parameter und der Standort automatisch hochgeladen und in einer webbasierten Datenbank (17) gespeichert werden.

## Claims

1. Method for creating a job (9,10) from a central operator software (1) for various laser types (2), in particular laser plotters (2a) or galvo marking lasers (2b), for engraving, marking, lettering and/or cutting a preferably flat workpiece (12,13), in which at least one beam source in the form of a laser is used in a housing of the laser device (2) for processing the workpiece (12,13), wherein the workpiece (12,13) is deposited in a defined manner in a processing chamber on a processing table and a laser beam emitted by the beam source sent via deflecting elements to at least one focusing unit, from which the laser beam is deflected in the direction of the workpiece (12,13) and positioned accordingly, wherein the control is effected via control software running in a control unit, in which a so-called job is processed, wherein a graphic and/or text is created or imported in a central operator software (1), whereupon the parameters (15) "material (15a), material thickness (15b), engraving depth or effect (15c), respectively, and cutting effect (15d)" are set in the operator software (1) for creation of the job (9,10), whereupon a laser type (2) - laser plotter (2a) or galvo marking laser (2b) - is suggested or determined by the operator software (1), or the desired laser type (2) - laser plotter (2a) or galvo marking laser (2b) - is selected by the user, **characterized in that** after selection of the laser type (2) the movement parameters of the selected laser type (2) required for generating the graphics and/or text are calculated and defined by an analysis tool (14), wherein the movement parameters for x-y movement paths of a carriage are calculated and generated by the analysis tool (14) when the laser type (2) "laser plotter (2a)" is selected, or the movement parameters for an angular adjustment of a mirror are calculated and generated when the laser type (2) "galvo marking laser (2b)" is selected, whereupon the laser power and speed are calculated and determined by the analysis tool (14).

2. Method according to claim 1, **characterized in that** the individual beam diameters of the laser types (2) are taken into account in the analysis tool (14) for determination of the movement parameters.

3. Method according to any one of the preceding claims, **characterized in that**, depending on the laser type (2), a stored beam diameter, in particular laser spot diameter, is used to calculate the movement parameters, or the lenses of the selected laser type (2) are queried and the beam diameter is calculated or determined from a database in accordance with the lens used.

4. Method according to any one of the preceding claims, **characterized in that** one or several setting options, such as cutting through, engraving quality, in particular engraving of low quality or fine-detail engraving or high-contrast engraving or photo engraving, deep engraving, fast cutting, precise cutting, etc., are selected when the parameter (15) "Effects (15c)" is.

5. Method according to any one of the preceding claims, **characterized in that** upon activation of the parameter (15) "Laser type (2)" a window is opened in which all available laser devices (2) are displayed.

6. Method according to claim 5, **characterized in that** all available laser devices (2) can be selected in the open window.

7. Method according to claim 5 or 6, **characterized in that** additional information of the displayed laser devices (2), such as status, processing time, utilization, etc., is displayed.

8. Method according to any one of the preceding claims, **characterized in that** all available laser types (2) can be displayed and selected.

9. Method according to any one of the preceding claims, **characterized in that** the central operator software (1) is invoked via a superordinate network, in particular in a cloud (4), wherein the available laser types (2), in particular laser devices (2), likewise are or are going to be connected to the cloud (4).

10. Method according to any one of the preceding claims, **characterized in that** the job (9,10) created by the central operator software (1) for the various laser types (2) is stored in the cloud (4).

11. Method according to any one of the preceding claims, **characterized in that** the job (9,10) can be loaded and processed simultaneously by one or several laser devices (2), in particular laser plotters (2a) and/or galvo marking lasers (2b), of identical and different locations.

12. Method according to claim 1 or 2, **characterized in that** when the job (9,10) is changed on a laser device (2), in particular laser plotter (2a) and/or galvo marking laser (2b), these changes are made available, in particular displayed, to the other laser device (2) processing this job (9,10).

13. Method according to any one of the preceding claims, **characterized in that** when a laser device (2) is connected to the web-based central operator software (1), all settings/parameters relating to this laser device (2) and the location are automatically uploaded and stored in a web-based database (17).

## Revendications

1. Procédé en vue de la création d'une tâche (9,10) à partir d'un logiciel utilisateur central (1) pour différents types de laser (2), notamment un laser à lit plat (2a) ou un système de marquage laser galvo (2b), pour la gravure, le marquage, l'étiquetage et/ou la découpe d'une pièce à usiner (12,13) de préférence plate, pour lequel on emploie au moins une source de rayonnement sous la forme d'un laser logé dans un boîtier du dispositif laser (2) pour le traitement de la pièce à usiner (12,13), la pièce à usiner (12,13) étant déposée de manière définie dans un espace de traitement sur un plateau de travail et un faisceau laser émis par la source de rayonnement étant envoyé à au moins une unité de mise au point par le biais d'éléments de déviation, à partir de laquelle le faisceau laser est dévié en direction de la pièce à usiner (12,13) et positionné en conséquence, la commande étant exécutée par le biais d'un logiciel de commande fonctionnant dans une unité de commande, dans laquelle une tâche est traitée, un graphique et/ou un texte étant créé ou importé dans un logiciel utilisateur central (1), après quoi les paramètres (15) « Matériau (15a), Épaisseur du matériau (15b), Profondeur de gravure ou Effet (15c) et Effet de découpe (15d) » sont configurés dans le logiciel utilisateur central (1) pour la création de la tâche (9, 10), après quoi un type de laser (2) - laser à lit plat (2a) ou système de marquage laser galvo (2b) - est suggéré ou choisi par le logiciel utilisateur (1), ou le type de laser (2) souhaité - laser à lit plat (2a) ou système de marquage laser galvo (2b) - est sélectionné par l'utilisateur, **caractérisé en ce que** les paramètres de déplacement du type de laser (2) sélectionné, nécessaires pour la création du graphique et/ou du texte, sont calculés ou définis par un outil d'analyse (14) après la sélection du type de laser (2), les paramètres de déplacement pour les trajectoires x-y d'un chariot étant calculés et générés par un outil d'analyse (14) lors de la sélection du type de laser (2) « Laser à lit plat (2a) » ou les paramètres de déplacement pour le réglage de l'angle d'un miroir étant calculés et générés lors de la sélection du type de laser (2) « Système de marquage laser galvo » (2b), après quoi la puissance laser et la vitesse sont calculées et définies par l'outil d'analyse (14).

2. Procédé selon la revendication 1, **caractérisé en ce que** les différents diamètres du faisceau des types de laser (2) sont pris en compte dans l'outil d'analyse (14) pour la détermination des paramètres de déplacement.

3. Procédé selon l'une des revendications précédentes, **caractérisé en ce que**, en fonction du type de laser (2), un diamètre de faisceau enregistré, notamment le diamètre du point laser, est pris en compte pour la détermination des paramètres de déplacement, ou les lentilles du type de laser (2) sélectionné sont interrogées, et le diamètre du faisceau est calculé ou défini à partir d'une base de données en fonction de la lentille employée.

4. Procédé selon l'une des revendications précédentes, **caractérisé en ce que**, une ou plusieurs options de réglage, telles que la découpe, la qualité de la gravure, notamment la gravure de moindre qualité, la gravure de détails fins, la gravure à haut contraste ou la gravure de photos, la gravure en profondeur, la découpe rapide, la découpe précise, etc. peuvent être sélectionnées pour le paramètre (15) « Effets (15c) ».

5. Procédé selon l'une des revendications précédentes, **caractérisé en ce que**, en cas d'activation du paramètre (15) « Type de laser (2) », une fenêtre est ouverte, dans laquelle toutes les machines laser (2) disponibles sont visibles.

6. Procédé selon la revendication 5, **caractérisé en ce que** toutes les machines laser (2) disponibles peuvent être sélectionnées dans la fenêtre ouverte.

7. Procédé selon l'une des revendications 5 ou 6, **caractérisé en ce que** des informations des machines laser (2) affichées, telles que le statut, le temps de traitement, le taux d'utilisation, etc. peuvent être affichées en plus.

8. Procédé selon l'une des revendications précédentes, **caractérisé en ce que** tous les types de laser (2) disponibles sont affichés et peuvent être sélectionnés.

9. Procédé selon l'une des revendications précédentes, **caractérisé en ce que** le logiciel utilisateur central (1) est appelé à partir d'un réseau supérieur, notamment dans un nuage (4), dans lequel les types de laser (2) disponibles, notamment les machines laser (2), seront ou sont également connectés au nuage (4).

10. Procédé selon l'une des revendications précédentes, **caractérisé en ce que** la tâche (9,10) générée par le logiciel utilisateur central (1) est enregistrée dans le nuage (4) pour les différents types de laser (2).

11. Procédé selon l'une des revendications précédentes, **caractérisé en ce que** la tâche (9,10) peut être chargée et traitée simultanément par une ou plusieurs machines laser (2), notamment des lasers à lit plat (2a) et/ou des systèmes de marquage laser galvo (2b), localisés à des emplacements identiques ou différents.

12. Procédé selon la revendication 1 ou 2, **caractérisé en ce que**, en cas de modification de la tâche (9,10) sur une machine laser (2), notamment un laser à lit plat (2a) et/ou un système de marquage laser galvo (2b), ces modifications seront mises à la disposition des autres machines laser (2) traitant cette tâche (9,10), et notamment affichées.

13. Procédé selon l'une des revendications précédentes, **caractérisé en ce que**, en cas de connexion d'une machine laser (2) avec le logiciel utilisateur central (1) en ligne, tous les réglages/paramètres spécifiques à cette machine laser (2) et la localisation sont automatiquement téléversés et enregistrés dans une base de données (17) en ligne.
